(19) Europäisches Patentamt
European Patent Office
Office européen des brevets

(11) Veröffentlichungsnummer : **0 145 654 B2**

(12) # NEUE EUROPÄISCHE PATENTSCHRIFT

(45) Veröffentlichungstag der neuen Patentschrift : **13.05.92 Patentblatt 92/20**

(21) Anmeldenummer : **84810535.9**

(22) Anmeldetag : **05.11.84**

(51) Int. Cl.[5] : **F16L 58/10,** F16L 58/02, C08G 59/40, C08G 59/50, B32B 27/38

(54) **Verfahren zum Innenauskleiden von Rohren oder Rohrteilstücken.**

Die Akte enthält technische Angaben, die nach dem Eingang der Anmeldung eingereicht wurden und die nicht in dieserPatentschrift enthalten sind.

(30) Priorität : **09.11.83 CH 6036/83**
**27.02.84 CH 931/84**

(43) Veröffentlichungstag der Anmeldung : **19.06.85 Patentblatt 85/25**

(45) Bekanntmachung des Hinweises auf die Patenterteilung : **25.11.87 Patentblatt 87/48**

(45) Bekanntmachung des Hinweises auf die Entscheidung über den Einspruch : **13.05.92 Patentblatt 92/20**

(84) Benannte Vertragsstaaten : **CH DE FR GB IT LI**

(56) Entgegenhaltungen :
**DE-A- 2 362 784**

(56) Entgegenhaltungen :
**FR-A- 2 297 378**
**GB-A- 2 042 673**
**GB-A- 2 060 810**
**GB-A- 2 072 300**
**US-A- 3 037 026**
**US-A- 3 519 576**
**US-A- 3 520 905**
**US-A- 4 250 293**
**H. LEE et al "Handbook of Epoxy Resins", 1967, pp. 9-5, 9-7, 9-10**

(73) Patentinhaber : **CIBA-GEIGY AG**
**Klybeckstrasse 141**
**CH-4002 Basel (CH)**

(72) Erfinder : **Schneider, Wolfgang**
**Liebrütistrasse 24.141.**
**CH-4303 Kaiseraugst (CH)**
Erfinder : **Amsler, Kurt**
**Leimenstrasse 78/2**
**CH-4051 Basel (CH)**

(74) Vertreter : **Zumstein, Fritz, Dr. et al**
**Zumstein & Klingseisen Patentanwälte**
**Bräuhausstrasse 4**
**W-8000 München 2 (DE)**

EP 0 145 654 B2

## Beschreibung

Die vorliegende Erfindung betrifft ein neues Verfahren zum Innenauskleiden von Rohren oder Rohrteilstücken nach dem sogenannten Insituform-Verfahren unter Vervendung bestimmter Bindemittel (Harz/Härter-Mischungen) sowie die damit erhaltenen Erzeugnisse.

Es ist bekannt, Rohre oder Rohrteilstücke, besonders im Boden verlegte, begehbare und nicht-begehbare Rohre und Leitungen, wie Abwasserkanäle, Gas- und Trinkwasserleitungen oder Öl-Pipelines, nach dem Insituform-Verfahren auszukleiden oder zu reparieren. Bei diesem Verfahren wird ein schlauchförmiges flexibles Laminat aus einer im wesentlichen flüssigkeitsundurchlässigen Membran, z. B. aus Polyvinylchlorid, Polyäthylen, Polyester oder Polyurethan, und einer faserförmigen Schicht, die mit einem noch nicht ausgehärteten Bindemittel imprägniert ist, mittels eines Zufuhr- oder Inversionsrohres in die auszukleidende oder zu sanierende Leitung eingebracht. Dabei liegt die mit dem Bindemittel bzw. Harz getränkte Schicht des Schlauches vorerst nach innen. Nach Befestigung des einen Schlauchendes am Ende des auszukleidenden Rohres wird unter Druck Wasser in das Inversionsrohr gepumpt, wobei sich der Schlauch umstülpt und mit der mit Harz getränkten Seite gegen die Rohrinnenwände gepresst wird. Die Aushärtung des Harzes wird im allgemeinen durch Einpumpen von heissem Wasser in das Inversionsrohr bewirkt.

Bei diesem Verfahren wurden bisher vor allem ungesättigte Polyesterharze eingesetzt. Diese Polyesterharze sind insofern nachteilig, als sie beim Härten einen relativ starken Schwund zeigen und eine ungenügende Haftfestigkeit auf dem Substrat sowie eine beschränkte Lagerfähigkeit bei Temperaturen über 25°C aufweisen. Ungesättigte Polyester enthalten im allgemeinen auch erhebliche Anteile an Styrol und müssen mittels Peroxiden ausgehärtet werden [vgl. z. B. Prospekt Synolite®, 593-610 050 der Herstellerfirma SYNRES]. Styrol hat einen unangenehmen Geruch und weist u.a. einen niedrigen Flammpunkt (31-32°C) sowie eine hohe Verdunstungszahl auf. Es ist ferner wegen seines hohen Dampfdruckes in gewerbe-hygienischer Hinsicht nicht unbedenklich.

Ungesättige Polyesterharze eignen sich z. B. nicht für das Neuauskleiden von Gasleitungen, da die Gasrückstände, wie Teer, die Härtung der Harze beeinträchtigen. Wegen des ihnen anhaftenden unangenehmen Styrolgeruchs und -geschmacks können sie auch nicht zum Auskleiden von Trinkwasserleitungen verwendet werden. Sie sollten ferner mit Vorteil nicht für Leitungen im Grundwasserbereich eingesetzt werden, weil wegen der ungenügenden Haftung des Harzes Grundwasser zwischen die Rohrinnenwand und die Auskleidung eindringen kann. Der Druck des Grundwassers führt dann häufig zu Ausbeulungen (grossen Blasen) in der Beschichtung, wodurch u.a. der freie Durchfluss des zu transportierenden Mediums behindert wird.

Im Insituform-Verfahren wurden auch schon Epoxidharz / Härter-Systeme eingesetzt, wobei als Härter aromatische oder aliphatische Polyamine verwendet wurden. Diese Systeme zeichnen sich gegenüber Polyesterharzen durch verbesserte Haftfestigkeit, geringeren Schwund und bessere mechanische Eigenschaften, wie erhöhte Zugscherfestigkeit, aus. Sie lassen jedoch bezüglich Lagerstabilität, Härtungstemperaturen und/oder Viskosität noch zu wünschen übrig [vgl. z. B. GB-PS 1.340.068 und 1.449.455; Gas-wasser-Abwasser, 61, 45-48 (1981) und "Polyester for relining underground pipes" in Australian Plastics and Rubber, Okt. 1980].

Gegenstand der Erfindung ist somit ein Verfahren zum Innenauskleiden von Rohren oder Rohrteilstücken nach den Insituform-Verfahren gemäß den Patentansprüchen.

Zur Herstellung der Salze (a) werden die anspruchsgemäßen aliphatischen, araliphatischen, aromatischen oder heterocyclischen (Poly)Amine mit mindesten einem tertiären Stickstoffatom verwendet.
Ansprüchsgemäße Amine sind solche der Formeln I-V

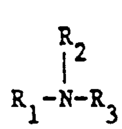

(I)

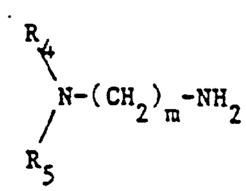

(II),

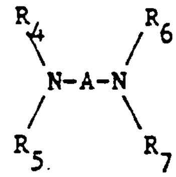

(III),

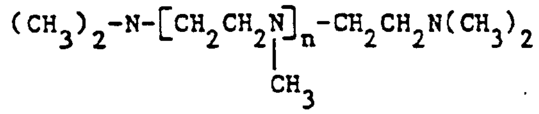

(IV)

und

$(CH_3)_2-N-A-R_8$ (V),

worin m eine Zahl von 2-6, besonders 2 oder 3, n Null, 1 oder 2,

$R_1$ $C_{1-12}$-Alkyl besonders Alkyl mit 1-8 und vor allem 1-4 C-Atomen, Hydroxyalkyl mit 1-4 C-Atomen oder Alkoxyalkyl mit insgesamt 2-6 C-Atomen,

$R_2$ und $R_3$ unabhängig voneinander dasselbe wie $R_1$ oder unsubstituiertes oder substituiertes Phenyl, Benzyl, Phenyläthyl, Cyclopentyl oder Cyclohexyl,

$R_4$ $C_{1-4}$-Alkyl, besonders Äthyl und vor allem Methyl,

$R_8$ $C_{1-4}$-Alkyl, besonders Äthyl und vor allem Methyl, Cyclopentyl oder Cyclohexyl,

$R_8$ $C_{1-12}$-Alkyl, besonders Alkyl mit 1-8 und vor allem 1-4 C-Atomen, Phenyl, Benzyl, Phenyläthyl, Benzoyl, Cyclopentyl, Cyclohexyl, $-A_1CN$ oder $-A_1CH_2NH_2$-

$R_7$ Wasserstoff oder $-A_1CH_2NH_2$ oder

$R_8$ und $R_7$ zusammen $-(CH_2)_p-$ mit p = 4 oder 5, $-(CH_2)_2O(CH_2)_2-$ oder $-(CH_2)_2NH(CH_2)_2-$,

$R_8$ $-OR_9$,

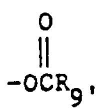, 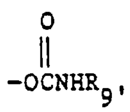, $-O-A_1CN$, $-O-A_1NH_2$, 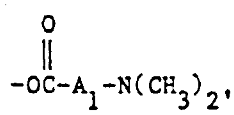,

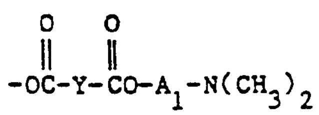 oder $-O-Y_1-O-A_1-N(CH_3)_2$,

$R_9$ $C_{1-12}$-Alkyl, vor allem $C_{1-4}$-Alkyl, Phenyl, Benzyl, Cyclopentyl oder Cyclohexyl,

A und $A_1$ unabhängig voneinander Äthylen, 1,2- oder 1,3-Propylen,

Y die direkte Bindung, $-C_rH_{2r}-$ mit r = 2-10, besonders 2-6, Phenylen, Toluylen oder Cyclohexylen und

$Y_1$ $-C_rH_{2r}-$ mit r = 2-10, besonders 2-6, Phenylen, Toluylen oder Cyclohexylen bedeuten.

Ansprüchsgemäße Amine sind auch tertiäre Aminophenole der Formel VI

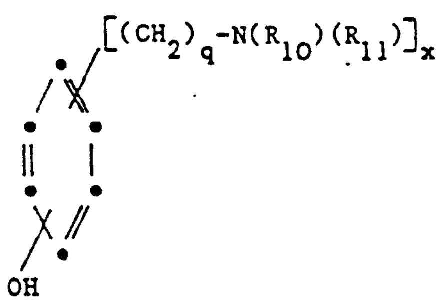

(VI),

worin q die Zahl 1 oder 2, x eine Zahl von 1 -3 und $R_{10}$ und $R_{11}$ unabhängig voneinander $C_{1-4}$-Alkyl, besonders Methyl oder Äthyl darstellen. Als Beispiele von Verbindungen der Formel VI seien genannt: Dimethylaminomethylphenol, Diäthylaminomethylphenol, Bis-(Dimethylaminomethyl)phenole, Bis-(Diäthylaminomethyl)phenole, Bis-(Diäthylaminoäthylphenole und vor allem 2,4,6-Tris-(Dimethylaminomethyl)phenol.
Ansprüchsgemäße Amine sind auch Imidazole der Formel VII

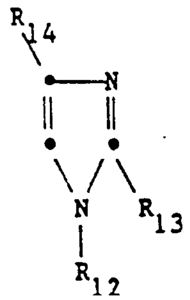

(VII),

worin $R_{12}$ Wasserstoff, $C_{1-4}$-Alkyl, Phenyl oder Benzyl und $R_{13}$ und $R_{14}$ unabhängig voneinander Wasserstoff, ein Halogenatom, wie Chlor oder Brom, $C_{1-4}$-Alkyl, Phenyl, Cyclohexyl oder Benzyl darstellen. Als Beispiele seien genannt: Imidazol, 2-Chlor-, 2-Methyl-, 2-Äthyl-, 2-n-Propyl- und 2-Phenylimidazol, 4-Methyl- und 4-n-Propylimidazol, 2-Methyl-4-phenylimidazol, 2-Cyclohexyl-4-methylimidazol und 2-Äthyl-4-methylimidazol. Bevorzugt sind Imidazole der Formel VII, worin $R_{12}$ und $R_{14}$ Wasserstoff und $R_{13}$ $C_{1-4}$-Alkyl, besonders Methyl, Äthyl oder n-Propyl, oder Phenyl darstellen oder worin $R_{12}$ und $R_{13}$ Wasserstoff sind und $R_{14}$ Wasserstoff, $C_{1-4}$-Alkyl, besonders Methyl, Äthyl oder n-Propylen, bedeutet.

Die Imidazole der Formel VII, worin $R_{12}$ Wasserstoff ist, können auch in Form von Addukten mit Polyglycidyläthern eingesetzt werden. Besonders vorteilhaft ist dies beim unsubstituierten Imidazol. Bevorzugt verwendet man für diese Vorreaktion Diglycidyläther von aromatischen Poylolen, insbesondere Bisphenol-A [2,2-Bis(4-hydroxy-phenyl)propan], hydriertem Bisphenol A [2,2-Bis(4-hydroxycyclo-hexyl)propan] oder Bisphenol F [Bis(4-hydroxyphenyl)methan].

Durch $R_1$ bis $R_6$ und $R_9$ bis $R_{14}$ dargestellte Alkylgruppen, Hydroxyalkylgruppen $R_1$ bis $R_3$ und Alkoxyalkylgruppen $R_1$ bis $R_3$ können geradkettig oder verzweigt sein. Als Beispiele seien genannt: Methyl, Äthyl, n-Propyl, Isopropyl, n-Butyl, sek-Butyl, n-Pentyl, 2-Pentyl, n-Hexyl, n-Heptyl, n-Octyl, n-Decyl und n-Dodecyl, Hydroxymethyl, 2-Hydroxyäthyl, 2-Hydroxypropyl, 3-Hydroxypropyl; Methoxymethyl, Äthoxymethyl, 2-Methoxyäthyl und 2-Isopropoxyäthyl.

Gruppen Y oder $Y_1$ = $-C_rH_{2r}-$ können ebenfalls geradkettig oder verzweigt sein, sind aber bevorzugt geradkettig und weisen 2-6 C-Atome auf.

Sind Phenyl-, Benzyl-, Phenyläthyl-, Cyclopentyl- oder Cyclohexylgruppen $R_2$ oder $R_3$ substituiert, so handelt es sich insbesondere um Chlor- oder Bromatome, Methyl-, Äthyl-, Methoxy- und Äthoxygruppen. Bevorzugt sind die genannten Reste jedoch unsubstituiert. Stellen Y oder $Y_1$ Phenylen, Toluylen oder Cyclohexylen dar, so handelt es sich vor allem um 1,3- oder 1,4-Phenylen, 1,4-Toluylen oder 1,4-Cyclohexylen. A und $A_1$ stellen vorzugsweise Äthylen und vor allem 1,3-Propylen dar.

Als Verbindungen der Formel I sind solche bevorzugt, worin $R_1$ und $R_2$ unabhängig voneinander $C_{1-4}$-Alkyl order $C_{2-4}$-Hydroxyalkyl und $R_3$ $C_{1-4}$-Alkyl, $C_{2-4}$-Hydroxyalkyl, unsubstituiertes Phenyl, Benzyl, Cyclopentyl oder Cyclohexyl darstellen. Besonders bevorzugt sind Amine der Formel I, worin $R_1$ und $R_2$ $C_{1-4}$-Alkyl und $R_3$ unsubstituiertes Phenyl und vor allem unsubstituiertes Benzyl darstellen.

Als Verbindungen der Formel II sind solche bevorzugt, worin m die Zahl 2 oder 3, $R_4$ Methyl oder Äthyl und $R_5$ Methyl, Äthyl oder Cyclohexyl darstellen.

In Verbindungen der Formel III stellen $R_4$ und $R_5$ vorzugsweise je Äthyl und besonders je Methyl dar $R_7$ ist bevorzugt Wasserstoff und $R_6$ ist vorzugsweise Methyl, Äthyl, n-Propyl, Isopropyl, n-Butyl, Isobutyl Cyclopentyl, Cyclohexyl, Benzoyl, 2-Cyanoäthyl oder 3-Aminopropyl. Des weiteren sind Verbindungen der Formel III bevorzugt, worin $R_6$ 2-Cyanoäthyl oder 3-Aminopropyl und $R_7$ 3-Aminopropyl bedeuten. Besonders bevorzugt sind Verbindungen der Formel III, worin Äthylen und vor allem 1,3-Propylen ist, $R_7$ Wasserstoff und $R_6$ 2-Cyanoäthyl oder 3-Aminopropyl bedeuten. Einige Beispiele für Verbindungen der Formel III sind: N,N-Dimethyl-N′-(2-cyanoäthyl)äthylendiamin, N,N-Dimethyl-N′-(3-aminopropyl)äthylendiamin, N,N-Dimethyl-N′,N′-di-(3-aminopropyl)äthylendiamin, N,N-Dimethyl-N′-(2-cyanoäthyl)r-1,3-diaminopropan, N,N-Dimethyl-N′-(3-aminopropyl)-1,3-diaminopropan, N,N-Dimethyl-N′,N′-(3-aminopropyl)-1,3-diaminopropan und N,N-Diäthyl-N′-(benzoyl)-1,3-diaminopropan.

In Verbindungen der Formel IV ist n bevorzugt Null oder 1.

$R_8$ in Formel V ist insbesondere eine Gruppe $-OR_9$,

$$-O\overset{\overset{O}{\|}}{C}R_9,$$

$$-O-\overset{\overset{O}{\|}}{C}-Y-\overset{\overset{O}{\|}}{C}-O-A_1-N(CH_3)_2$$

oder -O-$Y_1$-O-$A_1$-N($CH_3$)$_2$. Dabei stellt $R_9$ oder -O-$Y_1$-O-$A_1$-N($CH_3$)$_2$. Dabei stellt $R_9$ vorzugsweise Alkyl mit 1-4 C-Atomen, Phenyl oder Benzyl dar, Y ist die direkte Bindung, -($CH_2$)r- mit r = 2-6, 1,3- oder 1,4-Phenylen, $Y_1$ bedeutet -($CH_2$)$_r$- mit r - 2-6 1,3- oder 1,4-Phenylen und $A_1$ ist Äthylen und insbesondere 1,3-Propylen. Beispiele von Verbindungen der Formel V sind:

β-Dimethylaminoäthyl-β-cyanoäthyläther, γ-Dimethylaminopropyl-βcyanopropyläther, β-Dimethylaminoäthyl-γ-aminopropyläther, γ-Dimethylaminopropyl-γ-aminoisobutyläther, Essigsäure-β-dimethylaminoäthylester, Essigsäure-β-dimethylaminopropylester, Isobutter-säure-(2)-β-dimethylaminopropylester, Laurinsäureγ-dimethylaminopropylester, Benzoesäure-β-dimethylaminoäthylester, N-Phenylcarbaminsäure-β-dimethylaminoäthylester, β-Dimethylaminoäthylcarbonat, γ-Dimethylaminoäthyl-γ-dimethylaminopropyläther, 1,4-Cyclohexyl-di-(γ-dimethylaminopropyl)äther, Terephthalsäure-di-(γ-dimethylaminopropyl)-ester. Adipinsäure-di-(β-dimethylaminoäthyl)-ester.

Amine der oben erwähnten Art sind bekannt oder können nach an sich bekannten Methoden hergestellt werden (vgl. z. B. US-PS 4.201.854 und 4.324.739].

Besonders bevorzugt sind als Amine Verbindungen der Formel I, worin $R_1$ und $R_2$ Äthyl und vor allem Methyl darstellen und $R_3$ unsubstituiertes Phenyl und vor allem unsubstituiertes Benzyl sind, ganz besonders Benzyldimethylamin; Amine der Formel II, worin m die Zahl 2 oder 3 und $R_4$ und $R_5$ unabhängig voneinander Methyl oder Äthyl sind, besonders solche, worin m die Zahl 3 ist und $R_4$ und $R_5$ je Methyl oder je Äthyl darstellen; N,N-Dimethyl-N′-(3-aminopropyl)-1,3-diaminopropan, N,N-Dimethyl-N′-(2-cyanoäthyl)-1,3-diaminopropan und vor allem N,N-Diäthyl-N′(benzoyl)-1,3-diaminopropan, oder Gemische davon; Verbindungen der Formel VI, worin q die Zahl 1 ist und $R_{10}$ und $R_{11}$ je Äthyl und insbesondere je Methyl darstellen, wobei x die angegebene Bedeutung hat; Imidazole der Formel VII, worin $R_{12}$ und $R_{14}$ Wasserstoff sind und $R_{13}$ Wasserstoff oder $C_{1-4}$-Alkyl darstellt, sowie Addukte aus den genannten bevorzugten Imidazolen, besonders dem unsubstituierten Imidazol, und Diglycidyläthern von Bisphenol F, hydriertem Bisphenol A oder Bisphenol A.

Geeignete aromatische Polyole zur Herstellung der Salze (a) sind z. B. Resorcin, Hydrochinon, Bis(4-hydroxyphenyl)methan (Bisphenol F), 2,2-Bis(4-hydroxyphenyl)propan (Bisphenol A), 2,2-Bis(4-hydroxy-3,5-dibromphenyl)propan (Tetrabrombisphenol A), 1,1,2,2-Tetrakis(4-hydroxy-phenyl)äthan, 4,4′-Dihydroxybiphenyl, Bis(4-hydroxyphenyl)sulfon sowie Novolake aus Formaldehyd oder Acetaldehyd und Phenol, Chlorphenol oder Alkylphenolen mit bis zu 9 C-Atomen im Alkyl, insbesondere Kresol- und Phenol-Novolake. Bevorzugt verwendet man Salze aus Phenol-Novolaken und vor allem aus Resorcin, Bisphenol F oder Bisphenol A und den oben genannten bevorzugten Aminen. Ganz besonders bevorzugt sind Salze aus Resorcin, Bisphenol F oder Bisphenol A und Tris(dimethylaminomethyl)phenol, Dimethylaminomethylphenol, 2-n-Propylimidazol, N,N-Dimethylaminopropylamin, N,N-Diäthylaminopropylamin oder N,N-Diäthyl-N′-(benzoyl)-1,3-diaminopropan und Salze aus Resorcin, Bisphenol F oder Bisphenol A und einem Addukt aus Imidazol und einem Diglycidyläther von Bisphenol A oder Bisphenol F.

Als aliphatisch substituierte Phenole kommen vor allem Alkyl-, Alkenyl-, Alkadienyl- und Alkatrienylphenole mit 9-18 und vor allem 9-16 C-Atomen in den Alkyl-, Alkenyl-, Alkadienyl- und Alkatrienylgruppen in Betracht. Dabei können diese aliphatischen Gruppen geradkettig oder verzweigt sein, sind aber bevorzugt geradkettig. Als Beispiele von aliphatisch substituierten Phenolen seien erwähnt: 3- und 4-n-Nonylphenol, 3-n-Decylphenol, 4-n-Dodecylphenol, 4-n-Tetradecylphenol, 4-n-Pentadecylphenol, 4-n-Octadecylphenol 4-(2-Nonenyl)phenol, 3-(4-Decenyl)-phenol, 4-(2-Dodecenyl)phenol, 3-(9-Octadecenyl)phenol, 4-(1,3-Decadienyl)phenol, 3-(9,13-Octadecadienyl)phenol, 3-(n-Pentadecatrienyl)phenole, wie das unter der Bezeichnung "Phenol CNSL" bekannte, aus cashew nuts extrahierte 3-(2,4,6-Pentadecatrienyl)phenol, und 4-(9,11,15-Octadecatrienyl)phenol. Bevorzugt sind 3- und 4-n-Nonyl-phenol sowie das 3-(2,4,6-Pentadecatrienyl)phenol, insbesondere deren Salze mit 2-n-Propylimidazol oder Tris(dimethylaminomethyl)phenol. Im allgemeinen werden aber als Salze (a) vorzugsweise solche aus definitionsgemässen (Poly)Aminen und aromatischen Polyolen bevorzugt.

Gegenstand der Erfindung ist auch das Verfahren gemäß Anspruch 14. Besonders bevorzugt sind dabei

Salze aus Resorcin und 2-n-Propylimidazol, vor allem das 2:1 Salz aus Resorcin und 2-n-Propylimidazol.

Die Herstellung der Salze (a) kann auf an sich bekannte Weise durch Umsetzung der anspruchsgemäßen (Poly)Amine mit mindestens einem tertiären Stickstoffatom und Aromatischen Polyolen oder definitionsgemässen Phenolen, im allgemeinen durch Erhitzen der Reaktionstemperatur auf Temperaturen zwischen 80 und 150 und vor allem 100 und 130°C, erfolgen. Die Reaktionskomponenten werden dabei zweckmässig in solchen Mengen eingesetzt, dass auf ein Stickstoffäquivalent 1 bis OH-Äquivalente kommen. Die Salze (a) sind flüssig bis hochviskos. Deren Viskosität kann gewünschtenfalls mit hochsieden organischen Lösungsmitteln, reguliert werden, ausgewählt aus der Gruppe Benzyalkohol, Furfurylalkohol, Cyclopentanol, Cyclohexanol, Pinienöl und cyclische Ketone, wie Cyclopentanon und Cyclohexanon. Die Verdünnungsmittel werden all allgemeinen in Mengen von 20-80 Gew.%, bevorzugt 20-50 Gew.%, bezogen auf das Salz (a), eingesetzt. Bevorzugtes Verdünnungsmittel ist Benzylalkohol.

Als Epoxiharze (b) kommen vor allem solche mit durchschnittlich mehr als einer an ein Heteroatom, z. B. an ein S- und vorzugsweise an ein O- oder N-Atom, gebundenen Gruppe der Formel VIII

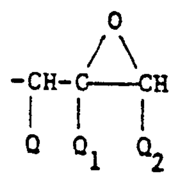

(VIII)

in Betracht, wobei Q und $Q_2$ je ein Wasserstoffatom und $Q_1$ ein Wasserstoffatom oder eine Methylgruppe bedeutet oder Q und $Q_2$ zusammen $-CH_2CH_2-$ oder $-CH_2CH_2CH_2-$ und $Q_1$ ein Wasserstoffatom bedeuten.

Als Beispiele solcher Harze seien Polyglycidyl- und Poly(β-methylglycidyl)ester genannt, die sich von aliphatischen, cycloaliphatischen oder aromatischen Polycarbonsäuren ableiten. Beispiele geeigneter Polycarbonsäuren sind Bernsteinsäure, Glutarsäure, Adipinsäure, Pimelinsäure, Korksäure, Azelainsäure, Sebacinsäure, dimerisierte oder trimerisierte Linolsäure, Tetrahydrophthalsäure, 4-Methyltetrahydrophthalsäure, Hexahydrophthalsäure, 4-Methylhexahydrophthalsäure, Phthalsäure, Iso- und Terephthalsäure.

Weitere Beispiele sind Polyglycidyl- und Poly(β-methylglycidyl)äther, die durch Umsetzung einer mindestens zwei alkoholische und/oder phenolische Hydroxylgruppen pro Molekül enthaltenden Verbindung mit Epichlorhydrin oder mit Allylchlorid und anschliessende Epoxidierung mit Persäuren erhalten werden.

Geeignete Polyole sind z. B. Äthylenglykol, Diäthylenglykol, Poly(oxyäthylen)glykole, Propan-1,2-diol, Poly(oxypropylen)-glykole, Propan-1,3-diol, Butan-1,4-diol, Poly(oxytetramethylen)-glykole, Pentan-1,5-diol, Hexan-2,4,6-triol, Glycerin, 1,1,1-Trimethylolpropan, Pentaerythrit und Sorbit; Resorcit, Chinit, Bis-(4-hydroxycyclohexyl)-methan, 2,2-Bis-(4-hydroxycyclohexyl)propan und 1,1-Bis-(hydroxymethyl)cyclohex-3-en; ferner aromatische Polyole der oben bei der Herstellung der Salze (a) erwähnten Art.

Als Poly(N-glycidyl)-Verbindungen kommen durch Dehydrochlorierung von Umsetzungsprodukten aus Epichlorhydrin und Aminen mit mindestens zwei Aminwasserstoffatomen erhaltene Produkte in Betracht. Geeignete Amine sind z. B. Anilin, n-Butylamin, Bis-(4-aminophenyl)-methan, 1,3- und 1,4-Xylylendiamin, 1,3-und 1,4-Bis(aminomethyl)-cyclohexan und Bis(4-methylaminophenyl)methan. Triglycidylisocyanurat, N,N′-Diglycidylderivate von cyclischen Alkylenharnstoffen, wie Äthylenharnstoff und 1,3-Propylenharnstoff, oder Hydantoinen, wie 5,5-Dimethylhydantoin, sind weitere geeignete derartige Verbindungen.

Poly(S-glycidyl)verbindungen sind z. B. die Di-S-Glycidylderivate von Dithiolen, wie Äthanol-1,2-dithiol und Bis-(4-mercaptomethyl-phenyl)-äther.

Beispiele für Epoxidharze mit einer oder mehreren Gruppen der Formel VIII, in welcher Q und $Q_2$ zusammen eine Gruppe $-CH_2CH_2-$ oder $-CH_2CH_2CH_2-$ bedeuten, sind Bis(2,3-epoxycyclopentyl)äther, 2,3-Epoxycyclopentylglycidyläther, 1,2-Bis(2,3-epoxycyclopentyloxy)äthan, 3,4-Epoxy-6-methylcyclohexylmethyl-3′,4′-epoxy-6′-methyl-cyclohexan-carboxylat und 2-(3,4-Epoxy)cyclohexyl-5,5-spiro(3′,4′-epoxy)cyclohexan-m-dioxan.

Ebenfalls einsetzbar sind Epoxidharze, in welchen die Epoxidgruppen an Heteroatome verschiedener Art gebunden sind, oder in denen einige oder sämtliche Epoxidgruppen mittelständig sind, wie beispielsweise das N,N,O-Triglycidylderivat des 4-Aminophenols, N-Glycidyl-N′-(2-glycidyloxypropyl)-5,5-dimethylhydantoin, Vinylcyclohexendioxid, Limonendioxid und Dicyclopentadiendioxid.

Die genannten Epoxidverbindungen können auch in beliebigen Mischungen untereinander oder mit festen Epoxidharzen, die in der Epoxidharzmischung löslich sind, eingesetzt werden, wobei die Viskosität der Endmischung bei Raumtemperatur zweckmässig kleiner als 15000 mPa.s, vorzugsweise kleiner als 8000 mPa.s, ist.

Besonders bevorzugt setzt man im erfindungsgemässen Verfahren gegebenenfalls vorverlängerte Diglycidyläther von zweiwertigen Phenolen, vor allem 2,2-Bis(4-hydroxyphenyl)propan, 2,2-Bis(3,5-dibrom-4-hydroxyphenyl)propan, Bis(4-hydroxyphenyl)methan, Bis(4-hydroxycyclohexyl)methan und 2,2-Bis(4-hydroxycyclohexyl)propan, Polyglycidyläther von Novolaken, oder tetraglycidyliertes 4,4'-Diaminodiphenylmethan ein. Ganz besonders bevorzugt sind gegebenenfalls vorverlängerte Diglycidyläther von Bisphenol A, Tetrabrom-Bisphenol A oder Bisphenol F, tetraglycidyliertes 4,4'-Diaminodi-phenylmethan, Polyglycidyläther von Phenol-Formaldehyd- oder Kresol-Formaldehyd-Novolaken, oder Gemische davon.

Die Epoxidharze (b) können mit einem reaktive Verdünner, wie z. B. Phenyl- oder Kresylglycidyläther, Butandioldiglycidyläther, Hexahydrophthalsäurediglycidylester Neopentylglykoldiglycidyläther, oder Glycidylestern von synthetischen hochverzweigten, in der Hauptsache tertiären aliphatischen Monocarbonsäuren, bekannt unter der Bezeichnung "CARDURA E", gemischt sein, vorzugsweise in einer Menge von 3-50 Gew.%, bezogen auf die Gesamtmenge der Epoxidharze. o-Kresylglycidyläther ist als reaktiver Verdünner bevorgzugt.

Die Erfindungsgemäss zu verwendenden Bindemittel können als weitere an sich bekannte Zusätze Thixotropiemittel und Farbstoffe, enthalten.

Die Salze (a) oder die an deren Stellen verwendbaren oder beschriebenen Gemische werden zweckmässig in einer solchen Menge eingesetzt, dass auf ein Epoxidäquivalent 0,02 bis 0,30, bevorzugt 0,04 bis 0,20, Stickstoffäquivalente kommen.

Zur Sicherstellung einer guten Imprägnierung des Laminats sollte die Viskosität des Bindemittels bei 25°C 6000 mPa.s, bevorzugt 3000 mPa.s und insbesondere 1000 mPa.s nicht übersteigen. Nötigenfalls wird der gewünschte Wert nach dem Vermischen aller Bindemittel-Komponenten durch Zugabe von geeigneten Verdünnungsmitteln eingestellt.

Die erfindungsgemäss zu verwendenden Bindemittel (Harzgemische) zeichnen sich durch eine gute Lagerstabilität (bis ca. 8 Tage bei Raumtemperatur) aus, so dass ein frühzeitiges Aushärten des Harzes während der Herstellung, einer allfälligen Lagerung und des Transports der damit imprägnierten Laminate an den Einsatzort vermieden werden kann. Die genannten Bindemittel lassen sich bei niedrigen Temperaturen, im allgemeinen schon bei 60°C, zu Beschichtungen mit guten mechanischen Eigenschaften, wie guter Zug- und Biegefestigkeit, und guter Beständigkeit gegen Chemikalien, aushärten. Die mit den definitionsgemässen Bindemitteln erhaltenen Auskleidungen oder Beschichtungen weisen ferner geringen Schwund und eine gute Haftung auf dem Substrat, d.h. auf den Rohrinnenwänden auf, die in vielen Fällen, bedingt durch ihre Zweckbestimmung, ihre Lage oder auch die der Neuauskleidung vorangegangene Reinigung, nass oder mindestens feucht sind. Dies ist überraschend, da Gemische aus Epoxidharzen und handelsüblichen Salzen tertiärer Amine mit organischen Säuren in Gegenwart von Wasser oder Feuchtigkeit im allgemeinen nur unvollständig aushärten und klebrige Überzüge mit ungenügenden mechanischen Eigenschaften ergeben.

Die Herstellung der einseitig mit dem definitionsgemässen Bindemittel beschichteten Laminate sowie die Auskleidung der Rohre nach dem Insituform-Verfahren können auf an sich bekannte Weise vorgenommen werden. Geeignete Methoden, Membran-Materialien und faserförmige Schichtstoffe sind z. B. in den GB-PS 1.340.068 und 1.569.675, den DE-OS 22 40 153 und 23 62 784 sowie dem "Insituform News Digest" der Fa. Insituform (Pipes & Structures) Ltd., England, beschrieben. Der relevante Teil dieser Publikationen ist Bestandteil der vorliegenden Erfindungsbeschreibung. Die Membran besteht bevorzugt aus einer Polyvinylchloridfolie, und als faserförmiger Schichtstoff wird vorzugsweise Polyester-Nadelfilz verwendet.

Die folgenden Beispiele erläutern die Erfindung.

**A. Herstellung der Härter**

**Beispiel 1:**

265 g (1 Mol) Tris-(dimethylaminomethyl)phenol und 330 g (3 Mol) Resorcin werden in einem 1,5 Liter Sulfierkolben, der mit Rührwerk, Rückflusskühler und Thermometer ausgerüstet ist, vorgelegt und unter Rühren in Stickstoffatmosphäre auf 110-120°C aufgeheizt. Im Bereich von 100°C löst sich die phenolische Komponente im Amin. Es erfolgt eine leicht exotherme Reaktion. Die Temperatur des Reaktionsgemisches wird während 60 Minuten zwischen 110-120° C gehalten. Anschliessend wird mit 450 g Benzylalkohol verdünnt. Man erhält eine hellbraune Lösung mit einer Viskosität von 5600 mPa.s bei 25°C; OH-Äquivalent: Stickstoffäquivalent [Val OH:Val N] = 2:1; Festkörpergehalt = 57 Gew.% (Härter Nr. 1).

**Beispiel 2:**

68 g (1 Mol) Imidazol und 272 g Benzylalkohol werden bei Raumtemperatur (20-25°C) in einem 750 ml Sulfierkolben, der mit Rührwerk, Tropftrichter, Rückflusskühler und Thermometer ausgerüstet ist, vorgelegt. Unter Stickstoff wird das Gemisch auf 100-110°C aufgeheizt, wobei sich das Imidazol klar löst. Man lässt 60 g eines technischen Bisphenol-A-diglycidyläthers (Viskosität 10000 mPa.s bei 25° C, 5,35 Epoxidäquivalente/kg) zutropfen, wobei die Zugabe so erfolgt, dass 120°C nicht überschritten werden. Anschliessend setzt man 200 g eines Phenol-Novolaks (OH-Äqivalentgewicht = 105; 3,6 phenolische OH-Gruppen pro Mol) zu und hält die Temperatur während ca. 60 Minuten bei 110-120°C. Das resultierende Produkt hat eine Viskosität von 1900 mPa.s bei 25°C; Val OH:Val N = 1:1; Festköpergehalt = 55 Gew.% (Härter Nr. 2).

**Beispiele 4-36:**

Analog den in den Beispielen 1 und 2 beschriebenen Verfahren werden die in der folgenden Tabelle 1 angegebenen Salze (Härter) hergestellt. Von den genannten Beispielen abweichende Reaktionsbedingungen sind ebenfalls in Tabelle 1 angegeben.

**Tabelle 1**

| Beispiel (Härter) Nr. | Salz aus (g) | Verdünnungsmittel (g) | Val OH: Val N | Viskosität bei 25°C (mPa.s) | Festkörpergehalt (Gew.%) |
|---|---|---|---|---|---|
| 4 | Bisphenol A/Dimethylaminomethylphenol (228/151) | Benzylalkohol (120) | 2:1 | 12000 | 76 |
| 5 | Bisphenol A/Dimethylaminomethylphenol (228/302) | Benzylalkohol (100) | 1:1 | 4700 | 84 |
| 6 | Bisphenol A/Benzyldimethylamin (228/135) | Benzylalkohol (67) | 2:1 | 13000 | 84 |
| 7 | Bisphenol A/Benzyldimethylamin (228/270) | Benzylalkohol (22) | 1:1 | 1200 | 96 |
| 8 | Resorcin/Dimethylaminomethylphenol (110/151) | Benzylalkohol (100) | 2:1 | 5300 | 72 |
| 9 | Resorcin/Dimethylaminomethylphenol (110/302) | Benzylalkohol (60) | 1:1 | 4100 | 85 |
| 10 | Resorcin/Benzyldimethylamin (110/135) | Benzylalkohol (55) | 2:1 | 1400 | 82 |
| 11 | Resorcin/Tris(dimethylaminomethyl)phenol (330/265) | Cyclohexanol (595) | 2:1 | 8300 | 50 |
| 12 | Resorcin/Tris(dimethylaminomethyl)phenol (330/265) | Cyclohexanon (595) | 2:1 | 680 | 50 |
| 13 | Resorcin/Tris(dimethylaminomethyl)phenol (330/265) | Furfurylalkohol (595) | 2:1 | 1300 | 50 |
| 14 | Resorcin/2-n-Propylimidazol (110/110) | Benzylalkohol (70) | 1:1 | 550 | 75 |
| 15 | Resorcin/2-n-Propylimidazol (220/110) | Benzylalkohol (110) | 2:1 | 1400 | 75 |
| 16 | Resorcin/N,N-Diäthylaminopropylamin (110/130) | Benzylalkohol (80) | 1:1 | 2900 | 75 |
| 17 | Resorcin/N,N-Dimethylaminopropylamin (220/98) | Benzylalkohol (166) | 2:1 | 9100 | 66 |
| 18 | Bisphenol A/N,N-Diäthylaminopropylamin (228/130) | Benzylalkohol (212) | 1:1 | 1000 | 63 |
| 19 | Bisphenol A/N,N-Diäthylaminopropylamin (456/130) | Benzylalkohol (384) | 2:1 | 2600 | 60 |
| 20 | Bisphenol A/N,N-Dimethylaminopropylamin (228/98) | Benzylalkohol (214) | 1:1 | 800 | 60 |
| 21 | Bisphenol A/2-n-Propylimidazol (228/110) | Benzylalkohol (222) | 1:1 | 360 | 60 |
| 22 | Novolak [1]/2-n-Propylimidazol (200/110) | Benzylalkohol (200) | 1:1 | 1000 | 61 |
| 23 | Novolak [1]/2-n-Propylimidazol (400/110) | Benzylalkohol (330) | 2:1 | 2400 | 61 |
| 24 | Novolak [1]/2-n-Propylimidazol (200/220) | Benzylalkohol (180) | 1:2 | ≈1000 | 70 |
| 25 | Novolak [1]/Imidazol (400/68) | Benzylalkohol (302) | 2:1 | 3100 | 61 |
| 26 | Novolak [1]/2-n-Propylimidazol/Imidazol (400/110/68), Imidazol mit 60 g des Bisphenol-A-Diglycidyläthers gemäss Beispiel 2 vorreagiert | Benzylalkohol (412) | 1:1 | 2500 | 61 |
| 27 | Resorcin/Imidazol (110/68), Imidazol vorreagiert mit 60 g des Bisphenol-A-Diglycidyläthers gemäss Beispiel 2 | Benzylalkohol (238) | 1:1 | 260 | 50 |
| 28 | Resorcin | Benzylalkohol (146) | 1:1 | 3200 | 70 |

| | | | | | |
|---|---|---|---|---|---|
| | 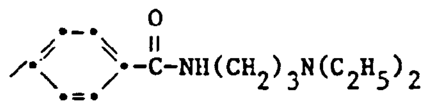 | | | | |
| | (110/234) | | | | |
| 29 | Resorcin | Benzylalkohol (196) | 2:1 | 14500 | 70 |
| | 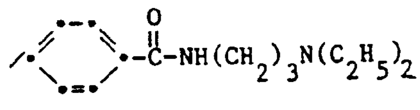 | | | | |
| | (220/234) | | | | |
| 30 | Resorcin | Benzylalkohol (252) | 1:2 | 530 | 70 |
| | 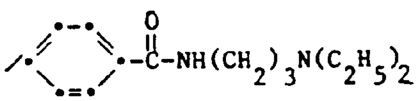 | | | | |
| | (110/468) | | | | |
| 31 | Resorcin/2-n-Propylimidazol | - | 2:1 | 82000 | 100 |
| 32 | 3-(2,4,6-Pentadecatrienyl)phenol [Phenol CNSL[2]]/Tris(dimethylaminomethyl)phenol (670/265) | - | 2:3 | 1200 | 100 |
| 33 | do. (1005/265) | - | 3:3 | 1000 | 100 |
| 34 | 4-n-Nonylphenol/Tris(dimethylaminomethyl)phenol (666:265) | - | 3:3 | 14700 | 100 |
| 35 | Phenol CNSL/2-n-Propylimidazol (335/110) | - | 1:2 | 200 | 100 |
| 36 | 4-n-Nonylphenol/2-n-Propylimidazol (444/110) | - | 2:2 | 1400 | 100 |

[1] Phenol-Novolak mit einem OH-Äquivalentgewicht von 105; 3,6 phenolische OH-Gruppen pro Mol.
[2] aus cashew nuts extrahiertes Phenol

2:1 -Salze aus Resorcin und 2-n-Propylimidazol können wie folgt hergestellt werden:

a) ohne Zusatz von Verdünnungsmittel (Härter Nr. 31)

In einem 1,5 Liter Sulfierkolben, der mit Kühler, Rührwerk, Thermometer und Pulvertrichter ausgerüstet ist, werden 330 g (3 Mol) 2-n-Propylimidazol vorgelegt. Das Produkt wird unter $N_2$-Atmosphäre gerührt und mittels eines heizbaren Ölbades auf ca. 100°C erwärmt. Anschliessend setzt man 660 g (6 Mol) Resorcin zu. Es erfolgt eine deutliche exotherme Reaktion. Man hält das Produkt nach dem Abklingen der Exothermie noch ca. 1 Stunde bei 120°C. Anschliessend wird abgekühlt. Das erhaltene Salz ist eine dunkelbraune klare hochviskose Flüssigkeit mit einem Amingehalt von 3,2 Äquivalenten/kg; Viskosität nach Höppler bei 25°C - 82000 mPa s; Dichte bei 25°C = 1,1 93 g/cm³; Brechungsindex bei 25°C = 1,572.

b) unter Zusatz von Benzylalkohol (Härter Nr. 15)

In einem 1,5 Liter Sulfierkolben, der mit Kühler, Rührwerk, Thermometer und Tropfzylinder ausgerüstet ist, werden 440 g (4 Mol) Resorcin und 220 g Benzylalkohol vorgelegt. Unter Rühren wird die Mischung in Inertgasatmosphäre mittels eines heizbaren Ölbades auf ca. 100-120°C aufgeheizt, wobei sich das Resorcin vollständig löst. Man setzt nun 220 g (2 Mol) 2-n-Propylimidazol zu, wobei eine deutliche exotherme Reaktion erfolgt. Die Zugabe des 2-n-Propylimidazols wird so geregelt, dass die Temperatur 130°C nicht überschreitet. Nach dem Abklingen der exothermen Reaktion wird das Produkt noch ca. 1 Stunde bei 130°C gehalten. Anschliessend wird abgekühlt. Man erhält eine klare braune Lösung des 2:1-Resorcin/2-n-Propylimidazol-Salzes mit einem Amingehalt von 2,4 Äquivalenten/kg; Viskosität bei 25°C = 1400 mPa s; Dichte bei 25°C = 1,149 g/cm³; Brechungsindex bei 25° C = 1,5620.

## B. Anwendungsbeispiele

### Beispiele 46-89

Harz und Härter werden in den in Tabelle 3 angegebenen Mengen von Hand in einem Becherglas vermischt. Dann wird die Viskosität der frisch hergestellten Mischungen ermittelt. Als Harz werden in sämtlichen Beispielen je 100 g eines Gemisches aus 73 Gew.% eines Bisphenol A-Diglycidyläthers (Viskosität bei 25°C 10000-12000 mPa.s, 5,25-5,4 Epoxidäquivalente/kg) und 27 Gew.% o-Kresylglycidyläther (Reaktivverdünner) verwendet.

Je vier Lagen eines 3 mm dicken Filzes (Polyester-Nadelfilz 15 x 20 cm) werden getrennt mit dem Harz/Härter-Gemisch imprägniert. Dann werden die vier Lagen des imprägnierten Filzes in einer Formpresse zu Prüfkörpern von 12 mm Dicke verpresst. Die Formpresse wird anschliessend in ein kaltes Wasser enthaltendes Becken gestellt, das von einem zweiten, mit einem Ölbad gefüllten Becken umgeben ist. Das Ölbad wird auf 70°C aufgeheizt, wodurch das Wasser im inneren Becken auf 60°C erhitzt wird. Das Wasserbad wird 5 Stunden auf 60°C gehalten. Dann schaltet man die Ölbadheizung ab und lässt über Nacht abkühlen. Am nächsten Morgen nimmt man die Pressform aus dem Wasser und entnimmt dieser die Prüfkörper. An den Prüfkörpern werden die folgenden Eigenschaften bestimmt:

- Zugfestigkeit (max) gemäss ISO 3268 (International Standards Organisation) in N/mm²,
- Biegezugfestigkeit (max) gemäss ASTM D 790 in N/mm²
- E-Modul gemäss ISO 3268 in N/mm².

Es wird ferner die Lagerfähigkeit der imprägnierten Filze (3 mm dick) bei 20°C geprütt, und zwar anhand der zunehmenden Steifigkeit des Filzes, d.h. bis dieser von Hand nicht mehr knetbar ist.

Die oben beschriebene Versuchsanordnung entspricht in sehr guter Annäherung den in der Praxis bei der Innenauskleidung von Rohren nach dem Insituform-Verfahren vorliegenden Verhältnissen.

Die Resultate der Versuche sind in der folgenden Tabelle 3 zusammengefasst.

**Tabell 3**

| Bsp. Nr. | Harzmischung aus 100 g Harz/ x g Härter Nr. | Viskosität d.Harz/Härter-mischung 25°C/mPa.s | Lagerfähigkeit 20°C/ (Tage) | Zugfestigkeit nach ISO 3268 N/mm$^2$ | Biegefestigkeit nach ASTM D 790 N/mm$^2$ | E-Modul nach ISO 3268 N/mm$^2$ |
|---|---|---|---|---|---|---|
| 46 | 10 g Härter Nr. 1 | 700 | 6 | 39 | 63 | 3530 |
| 47 | 15 g Härter Nr. 2 | 600 | 5 | 37 | 62 | 3500 |
| 49 | 10 g Härter Nr. 4 | 620 | 6 | 43 | 66 | 3600 |
| 50 | 10 g Härter Nr. 5 | 670 | 3 | 49 | 68 | 3900 |
| 51 | 10 g Härter Nr. 6 | 650 | 2 | 40 | 59 | 3400 |
| 52 | 10 g Härter Nr. 8 | 550 | 6 | 43 | 67 | 3800 |
| 53 | 10 g Härter Nr. 9 | 540 | 3 | 44 | 67 | 3700 |
| 54 | 10 g Härter Nr. 10 | 610 | 1 | 46 | 61 | 3700 |
| 55 | 12 g Härter Nr. 11 | 600 | 6 | 41 | 71 | 3400 |
| 56 | 12 g Härter Nr. 12 | 600 | 7 | 40 | 73 | 3400 |
| 57 | 12 g Härter Nr. 13 | 550 | 5 | 38 | 61 | 3600 |
| 58 | 10 g Härter Nr. 14 | 560 | 4 | 41 | 65 | 3500 |
| 59 | 10 g Härter Nr. 15 | 560 | 6 | 38 | 54 | 3200 |
| 60 | 7 g Härter Nr. 16 | 500 | 5 | 44 | 72 | 3500 |
| 61 | 10 g Härter Nr. 17 | 700 | 6 | 49 | 72 | 3800 |
| 62 | 10 g Härter Nr. 18 | 460 | 4 | 40 | 62 | 3300 |
| 63 | 20 g Härter Nr. 19 | 500 | 5 | 41 | 73 | 3400 |
| 64 | 12 g Härter Nr. 21 | 620 | 3 | 37 | 61 | 3300 |
| 65 | 15 g Härter Nr. 21 | 430 | 4 | 42 | 63 | 3600 |
| 66 | 10 g Härter Nr. 22 | 550 | 5 | 39 | 63 | 3500 |
| 67 | 10 g Härter Nr. 23 | 640 | 4 | 39 | 71 | 3500 |
| 68 | 10 g Härter Nr. 24 | 540 | 4 | 37 | 62 | 3500 |
| 69 | 15 g Härter Nr. 25 | 670 | 5 | 38 | 63 | 3600 |
| 70 | 15 g Härter Nr. 26 | 610 | 4 | 39 | 62 | 3700 |
| 71 | 12 g Härter Nr. 27 | 470 | 5 | 32 | 50 | 3600 |
| 81 | 20 g Härter Nr. 28 | 600 | 3 | 35 | 51 | 3600 |
| 82 | 20 g Härter Nr. 29 | 800 | 5 | 38 | 58 | 3350 |
| 83 | 20 g Härter Nr. 30 | 400 | 2 | 32 | 50 | 2800 |
| 84 | 7,5 g Härter Nr. 31 | 1000 | 6 | 41 | 58 | 3500 |

1) nicht bestimmt.

**Tabelle 3** (Fortsetzung)

| Bsp. Nr. | Harzmischung aus 100 g Harz/ x g Härter Nr. | Viskosität d.Harz/Härter-mischung 25°C/mPa.s | Lagerfähigkeit 20°C/ (Tage) | Zugfestigkeit nach ISO 3268 N/mm$^2$ | Biegefestigkeit nach ASTM D 790 N/mm$^2$ | E-Modul nach ISO 3268 N/mm$^2$ |
|---|---|---|---|---|---|---|
| 85 | 12 g Härter Nr. 32 | 600 | 3 | 29 | 53 | 2900 |
| 86 | 10 Härter Nr. 33 | 600 | 6 | 31 | 47 | 2700 |
| 87 | 10 g Härter Nr. 34 | 600 | 2 | 35 | 54 | 3300 |
| 88 | 20 Härter Nr. 35 | 400 | 3 | 34 | 63 | 2800 |
| 89 | 10 g Härter Nr. 36 | 600 | 5 | 30 | 56 | 3250 |

**Beispiel 90-100:**

Nach dem in den Beispielen 46-89 beschriebenen Verfahren werden weitere Harz/Härtermischungen geprüft. Es werden die folgenden Harze verwendet:

**Harz I:**

Gemisch aus 70 Gew.% Bisphenol-A-Diglycidyläther mit 5,25-5,4 Epoxidäquivalenten/kg und 30 Gew.% Bisphenol-F-Diglycidyläther mit 5,7 Epoxidäquivalenten/kg.

**Harz II:**

Bisphenol-A-Diglycidyläther mit 5,25-5,4 Epoxidäquivalenten/kg.

**Harz III:**

Gemisch aus 50 Gew.% Bisphenol-A-Diglycidyläther mit 5,25-5,4 Epoxidäquivalenten/kg und 50 Gew.% destilliertem Bisphenol-F-Diglycidyläther mit 6,1 Epoxidäquivalenten/kg.

**Harz IV**:

Gemisch aus 94 Gew.% Bisphenol-A-Diglycidyläther mit 5,25-5,4 Epoxidäquivalenten/kg und 6 Gew.% o-Kresylglycidyläther.

**Harz V:**

Bisphenol-F-Diglycidyläther mit 5,7 Epoxidäquivalenten/kg.

**Harz VI:**

destillierter Bisphenol-F-Diglycidyläther mit 6,1 Epoxidäquivalenten/kg.

**Harz VII:**

Gemisch aus 90 Gew.% Harz 1 und 10 Gew.% eines Gemisches aus n-Dodecyl- und n-Tetradecylglycidyläther mit 3,4 Epoxidäquivalenten/kg.

**Harz VIII:**

Gemisch aus 90 Gew.% Bisphenol-A-Diglycidyläther mit 5,25-5,4 Epoxidäquivalenten/kg und 10 Gew.% eines Gemisches aus n-Dodecyl- und n-Tetradecylglycidyläther mit 3,4 Epoxidäquivalenten/kg.

**Harz IX:**

Gemisch aus 78 Gew.% Bisphenol-A-Diglycidyläther mit 5,25-5,4 Epoxidäquivalenten/kg und 22 Gew.% Neopentylglykoldiglycidyläther mit 7,2 Epoxidäquivalenten/kg.
Die Resultate sind in der folgenden Tabelle 4 zusammengefasst.

**Tabell 4**

| Bsp. Nr. | Harzmischung aus 100 g Harz/ x g Härter Nr. | Viskosität d.Harz/Härtermischung 25° C/mPa.s | Lagerfähigkeit 20° C/ (Tage) | Zugfestigkeit nach ISO 3268 N/mm² | Biegefestigkeit nach ASTM D 790 N/mm² | E-Modul nach ISO 3268 N/mm² |
|---|---|---|---|---|---|---|
| 90 | 100 g Harz I/10 g Härter Nr. 15 | 6500 | 3 | 46 | 82 | 3500 |
| 91 | 100 g Harz II/10 g Härter Nr. 15 | 6800 | 3 | 45 | 64 | 3700 |
| 92 | 100 g Harz III/10 g Härter Nr. 15 | 3300 | 3 | 38 | 61 | 3500 |
| 93 | 100 g Harz IV/10 g Härter Nr. 15 | 4000 | 3 | 38 | 67 | 3750 |
| 94 | 100 g Harz V/10 g Härter Nr. 15 | 4300 | 3 | 45 | 72 | 3500 |
| 95 | 100 g Harz VI/10 g Härter Nr. 15 | 1500 | 5 | 37 | 58 | 3400 |
| 96 | 100 g Harz VII/10g Härter Nr. 15 | 1600 | 5 | 40 | 60 | 3000 |
| 97 | 100 g Harz I/10 g Härter Nr. 14 | 6000 | 1 | 50 | 66 | 3770 |
| 98 | 100 g Harz IV/10 g Härter Nr. 14 | 4600 | 1 | 44 | 69 | 3700 |
| 99 | 100 g Harz VIII/10 g Härter Nr. 14 | 2300 | 2 | 44 | 70 | 3500 |
| 100 | 100 g Harz IX/10 g Härter Nr. 14 | 1100 | 2 | 45 | 76 | 3500 |

## Patentansprüche

1. Verfahren zum Innenauskleiden von Rohren oder Rohrteilstücken nach dem Insituform-Verfahren, indem man ein schlauchförmiges flexibles Laminat aus einer im wesentlichen flüssigkeitsundurchlässigen Membran und einer faserförmigen Schicht, die mit einem nach nicht ausgehärteten Bindemittel imprägniert ist, mittels wasser druck mit der das Bindemittel aufweisenden Seite so gegen die Rohrinnenoberfläche presst, dass das Laminat die Gestalt der Rohrinnenoberfläche annimmt und das Bindemittel in diesem Zustand durch Einpumpen von heißen Wasser unter Ausbildung einer festhaftenden Innenauskleidung aushärtet, dadurch gekennzeichnet, dass man ein Laminat verwendet, das mit einem Bindemittel imprägniert ist, welches aus folgenden Komponenten gesteht :

(a) als Härter ein Salz aus einem oder mehreren (Poly)Aminen mit mindesten einem tertiären Stickstoffatom und einem oder mehreren aromatischen Polyolen oder einem oder mehreren aliphatisch substituierten Phenolen, wobei der aliphatische Rest mindestens 9 C-Atome aufweist das flüssig bis hochviskos ist und das gegebenenfalls mit hochsiedenden organischen Lösungsmitteln aus der Gruppe Benzylalkohol, Furfurylalkohol, Cyclopentanol, Cyclohexanol, Pinienöl und cyclische Ketone, verdünnt ist,

(b) ein flüssiges Epoxidharz oder ein flüssiges Gemisch von Epoxidharzen dem gegebenenfalls ein reaktives Verdünnen zugzsetzt ist,

(c) gegebenenfalls als weitere bekannte Zusätze Thixotropimittel und Farbstoffe, wobei das Amin in dem Härter (a) ein Amin der Formeln I bis VII

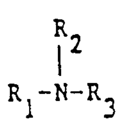 (I), 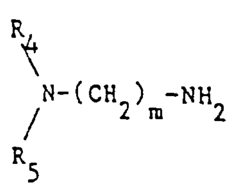 (II), 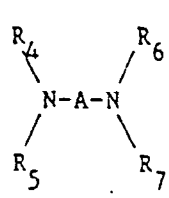 (III),

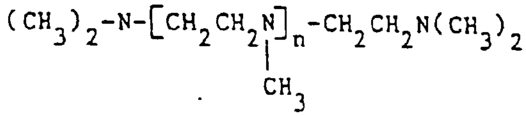 (IV), $(CH_3)_2-N-A-R_8$ (V),

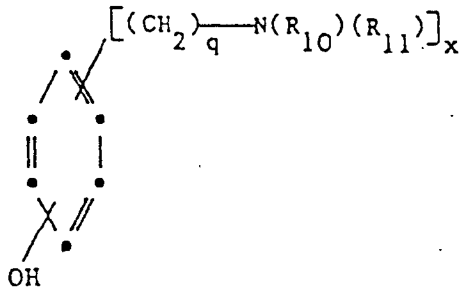

(VI)

oder

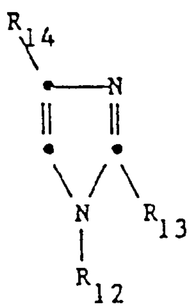

(VII)

ist, worin

m eine Zahl von 2-6, n Null, oder 2,

$R_1$ $C_{1-12}$-Alkyl, Hydroxyalkyl mit 1-4 C-Atomen oder Alkoxyalkyl mit insgesamt 2-6 C-Atomen,

$R_2$ und $R_3$ unabhängig voneinander dasselbe wie $R_1$ oder unsubstituiertes oder substituiertes Phenyl Benzyl Phenyläthyl, Cyclopentyl oder Cyclohexyl,

$R_4$ $C_{1-4}$-Alkyl,

$R_5$ $C_{1-4}$-Alkyl, Cyclopentyl oder Cyclohexyl,

$R_6$ $C_{1-12}$-Alkyl, Phenyl, E enzyl, phenyläthyl, Benzoyl, Cyclopentyl, Cyclohexyl, $-A_1CN$ oder $-A_1CH_2NH_2$,

$R_7$ Wasserstoff oder $-A_1CH_2NH_2$ oder

$R_6$ und $R_7$ zusammen $-(CH_2)_p-$ mit p = 4 oder 5, $-(CH_2)_2O(CH_2)_2-$ oder $-(CH_2)_2NH(CH_2)_2-$, $R_8$ $-OR_9$,

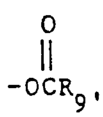, 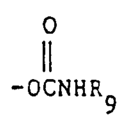, $-O-A_1CN$, $-O-A_1NH_2$, 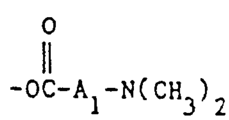,

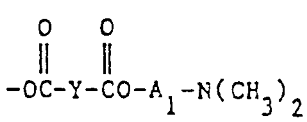 oder $-O-Y_1-O-A_1-N(CH_3)_2$,

$R_9$ $C_{1-12}$-Alkyl, Phenyl, Benzyl, Cyclopentyl oder Cyclohexyl,

$R_{10}$ und $R_{11}$ unabhängig voneinander $C_{1-4}$-Alkyl,

$R_{12}$ Wasserstoff, $C_{1-4}$-Alkyl, Phenyl, oder Benzyl und ,

$R_{13}$ und $R_{14}$ unabhängig voneinander Wasserstoff, ein Hälogenatom, $C_{1-4}$-Alkyl, Phenyl, Cyclohexyl oder Benzyl darstellen,

A und $A_1$ unabhängig voneinander Äthylen, 1,2- oder 1,3-Propylen,
Y die direkte Bindung, $-C_rH_{2r}$,- mit r - 2-10, Phenylen, Toluylen oder Cyclohexylen,
$Y_1$-$C_rH_{2r}$- mit r - 2-10, Phenylen, Toluylen oder Cyclohexylen,
q die Zahl 1 oder 2 und x eine Zahl von 1-3 bedeuten.

2. Verfahren nach Anspruch 1, worin das Amin ein Addukt eines Imidazols der Formel VII, worin $R_{12}$ Wasserstoff bedeutet und $R_{13}$ und $R_{14}$ die im Anspruch 1 angegebene Bedeutung haben, mit einem Diglycidyläther eines aromatischen Polyols, besonders einem Diglycidyläther von 2,2-Bis(4-hydroxyphenyl)propan [Bisphenol A], 2,2-Bis(4-hydroxy-cyclohexyl)propan [hydriertes Bisphenol A] oder Bis(4-hydroxyphenyl)methan [Bisphenol F] ist.

3. Verfahren nach Anspruch 1, worin das Amin N,N-Dimethyl-N′-(3-amino-propyl)-1,3-diaminopropan, N,N-Dimethyl-N′-(2-cyanoäthyl)-1,3-diamino-propan oder N,N-Diäthyl-N′-(benzoyl)-1,3-diaminopropan oder ein Gemisch davon oder eine Verbindung der Formel I, II, VI oder VII ist, wobei $R_1$ und $R_2$ Äthyl oder Methyl, $R_{13}$ unsubstituiertes Phenyl oder unsubstituiertes Benzyl, m die Zahl 2 oder 3, $R_4$ und $R_5$ unabhängig voneinander Methyl oder Äthyl, q die Zahl 1, $R_{10}$ und $R_{11}$ je Äthyl oder je Methyl, $R_{12}$ und $R_{14}$ Wasserstoff und $R_{13}$Wasserstoff oder $C_{1-4}$-Alkyl darstellen und x die im Anspruch 1 angegebene Bedeutung hat.

4. Verfahren nach Anspruch 1, worin das Amin ein Addukt aus Imidazol und einem Diglycidyläther von Bisphenol F, hydriertem Bisphenol A oder Bisphenol A ist.

5. Verfahren nach Anspruch 1, worin der Polyol in der Härter-Komponente (a) Resorcin, Hydrochinon, Bisphenol F, Bisphenol A, 2,2-Bis-(4-hydroxy-3,5-dibromphenyl)propan, 1,1,2,2-Tetrakis(4-hydroxyphenyl)äthan, 4,4′-Dihydroxybiphenyl, Bis(4-hydroxyphenyl)sulfon oder ein Novolak aus Formaldehyd oder Acetaldehyd und Phenol, Chlorphenol oder einem Alkylphenol mit bis zu 9 C-Atomen im Alkyl ist.

6. Verfahren nach den Ansprüchen 1-4, worin das Polyol in der Härter-Komponente (a) ein Phenol-Novolak, Resorcin, Bisphenol F oder Bisphenol A ist.

7. Verfahren nach Anspruch 1, worin die Härter-Komponente (a) ein Salz aus Resorcin, Bisphenol F oder Bisphenol A und Tris(dimethylaminomethyl)phenol, Dimethylaminomethylphenol, 2-n-Propylimidazol, N,N-Dimethylaminopropylamin, N,N-Diäthylaminopropylamin oder N,N-Diäthyl-N′-(benzoyl)-1,3-diaminopropan oder ein Salz aus Resorcin, Bisphenol F oder Bisphenol A und einem Addukt aus Imidazol und einem Diglycidyläther von Bisphenol A oder Bisphenol F ist.

8. Verfahren nach Anspruch 1, dadurch gekennzeichnet, dass man als Härter-Komponente (a) Salze verwendet, worin auf ein Stickstoffäquivalent 1 bis 2 OH-Äquivalente kommen.

9. Verfahren nach Anspruch 1, dadurch gekennzeichnet, dass man als Komponente (b) Epoxidharze mit durchschnittlich mehr als einer an ein Heteroatom gebundenen Gruppe der Formel VIII

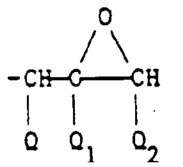

(VIII)

verwendet, worin Q und $Q_2$ je ein Wasserstoffatom und $Q_1$ ein Wasserstoffatom oder eine Methylgruppe bedeuten oder Q und $Q_2$ zusammen $-CH_2CH_2-$ oder $-CH_2CH_2CH_2-$ und $Q_1$ ein Wasserstoffatom bedeuten.

10. Verfahren nach Anspruch 1, dadurch gekennzeichnet, dass man als Komponente (b) gegebenenfalls vorverlängerte Diglycidyläther von 2,2-Bis(4-hydroxyphenyl)propan, 2,2-Bis(3,5-dibrom-4-hydroxyphenyl)propan [Tetrabrom-Bisphenol A], Bis(4-hydroxyphenyl)methan, Bis(4-hydroxycyclohexyl)methan oder 2,2-Bis(4-hydroxycyclohexyl)propan, Polyglycidyläther von Novolaken oder tetraglycidyliertes 4,4′-Diaminodiphenylmethan verwendet.

11. Verfahren nach Anspruch 1, dadurch gekennzeichnet, dass man als Komponente (b) gegebenenfalls vorverlängerte Diglycidyläther von Bisphenol A, Tetrabrom-Bisphenol A oder Bisphenol F, tetraglycidyliertes 4,4′-Diaminodiphenylmethan, Polyglycidyläther von Phenol-Formaldehyd- oder Krësol-Formaldehyd-Novolaken oder Gemische davon verwendet.

12. Verfahren nach Anspruch 1 dadurch gekennzeichnet, dass man die Härterkomponente (a) in einer solchen Menge einsetzt, dass auf ein Epoxidäquivalent der Komponente (b) 0,02 bis 0,30 besonders 0,04 bis 0,20 Stickstoffäquivalente kommen.

13. Verfahren nach Anspruch 1 worin die Viskosität des Bindemittels bei 25°C 6000 mPa.s, besonders 3000 mPa.s, nicht übersteigt.

14. Verfahren nach Anspruch 1, worin als Härkes-Komponente (a) Salze aus Resorcin oder Bisphenol A und Dimethylaminomethylphenol, Tris(dimethylaminomethyl)phenol oder 2-n-Propylimidazol, Salze aus einem

Phenol-Novolak und Imidazol, 2-n-Propylimidazol oder einem Addukt aus Imidazol und einem Bisphenol-A-Diglyciläther sowie Salze aus Resorcin oder Bisphenol A und einem Addukt aus Imidazol und einem Bisphenol-A-Diglycidyläther eingesetzt werden.

## Claims

1. A process for lining the inner surfaces of pipes or pipe sections by the Insituform method by pressing a tubular flexible laminate made up of an essentially liquid-impermeable membrane and a fibrous layer which has been impregnated with a binder which is not as yet fully cured with the face with the binder against the inner surface of the pipe by means of water pressure in such a way that the laminate takes on the shape of the inner surface of the pipe and by pumping in hot water the binder becomes fully cured in this state, forming a firmly adhering internal lining, which comprises using a laminate which has been impregnated with a binder comprising the following components:

(a) a curing agent which is a salt of one or more (poly)-amines having at least one tertiary nitrogen atom and one or more aromatic polyols or one or more aliphatically substituted phenols, the aliphatic radical having at least 9 carbon atoms, which is liquid to highly viscous and which is optionally diluted with high-boiling organic solvents from the group consisting of benzyl alcohol, furfuryl alcohol, cyclopentanol, cyclohexanol, pine oil and cyclic ketones,

(b) a liquid epoxy resin or a liquid mixture of epoxy resins, to which is optionally added a reactive diluent, and

(c) optionally, thixotropic agents and dyes as further known additives where the amine in curing agent (a) is an amine of formulae I to VII

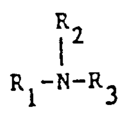 (I), 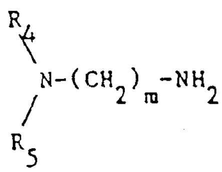 (II), 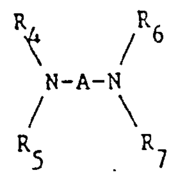

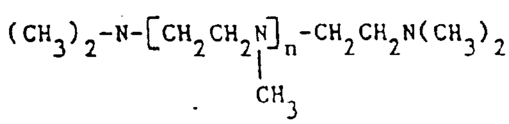 (IV), $(CH_3)_2-N-A-R_8$ (V)

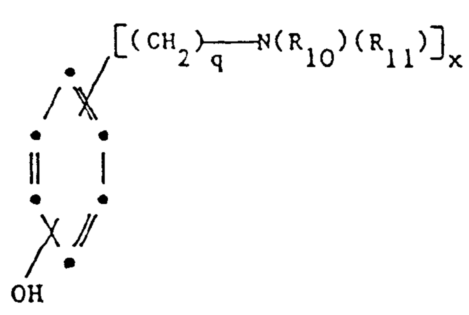 (VI)

or

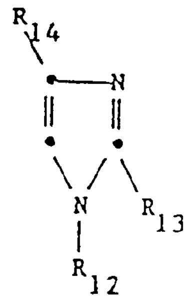

(VII)

in which

m is 2-6, n is zero, 1 or 2,

$R_1$ is $C_{1-12}$alkyl, hydroxyalkyl having 1-4 carbon atoms or alkoxyalkyl having a total of 2-6 carbon atoms,

$R_2$ and $R_3$, independently of the other, are each the same as $R_1$ or are each unsubstituted or substituted phenyl, benzyl, phenylethyl, cyclopentyl or cyclohexyl,

$R_4$ is $C_{1-4}$alkyl,

$R_5$ is $C_{1-4}$alkyl, cyclopentyl or cyclohexyl,

$R_6$ is $C_{1-12}$alkyl, phenyl, benzyl, phenylethyl, benzoyl, cyclopentyl, cyclohexyl, $-A_1CN$ or $-A_1CH_2NH_2$,

$R_7$ is hydrogen or $-A_1CH_2NH_2$ or

$R_6$ and $R_7$ together are $-(CH_2)_P-$ with p = 4 or 5, $-(CH_2)_2O(CH_2)_2-$ or $-(CH_2)_2NH(CH_2)_2-$,

$R_8$ is

$$-OR_9,\ -O\overset{O}{\overset{\|}{C}}R_9,\ -O\overset{O}{\overset{\|}{C}}NHR_9,\ -O-A_1CN,\ -O-A_1NH_2,\ -O\overset{O}{\overset{\|}{C}}-A_1-N(CH_3)_2,\quad -O\overset{O}{\overset{\|}{C}}-Y-\overset{O}{\overset{\|}{C}}O-A_1-N(CH_3)_2 \text{ or } -O-Y_1-O-A_1-N(CH_3)_2,$$

$R_9$ is $C_{1-12}$alkyl, phenyl, benzyl, cyclopentyl or cyclohexyl,

$R_{10}$ and $R_{11}$, independently of the other, are each $C_{1-4}$alkyl,

$R_{12}$ is hydrogen, $C_{1-4}$alkyl, phenyl or benzyl and

$R_{13}$ and $R_{14}$, independently of the other, are each hydrogen, a halogen atom, $C_{1-4}$alkyl, phenyl, cyclohexyl or benzyl,

A and $A_1$, independently of the other, are each ethylene or 1,2- or 1,3-propylene,

Y is a direct bond, $-C_rH_{2r}-$ with r = 2-10, phenylene, toluylene or cyclohexylene,

$Y_1$ is $-C_rH_{2r},-$ with r - 2-10, phenylene, toluylene or cyclohexylene,

q is 1 or 2 and x is 1-3.

2. A process according to claim 1, wherein the amine is an adduct of an imidazole of the formula VII in which $R_{12}$ is hydrogen and $R_{13}$ and $R_{14}$ are as defined in claim 1 with a diglycidyl ether of an aromatic polyol, in particular a diglycidyl ether of 2,2-bis(4-hydroxyphenyl)propane[bisphenolA], 2,2-bis(4-hydroxycyclohexyl)propane [hydrogenated bisphenol A] or bis(4-hydroxyphenyl)methane [bisphenol F].

3. A process according to claim 1, wherein the amine is N,N-dimethyl-N'-(3-aminopropyl-1,3-diaminopropane, N,N-dimethyl-N'-(2-cyanoethyl)-1,3-diaminopropane or N,N-diethyl-N'(benzoyl)-1,3-diaminopropane or a mixture thereof or a compound of the formula I, II, VI or VII where $R_1$ and $R_2$ are each ethyl or methyl, $R_3$ is unsubstituted phenyl or unsubstituted benzyl, m is 2 or 3, $R_4$ and $R_5$, independently of the other, are each methyl or ethyl, q is 1, $R_{10}$ and $R_{11}$ are both ethyl or are both methyl, $R_{12}$ and $R_{14}$ are each hydrogen, $R_{13}$ is hydrogen or $C_{1-4}$alkyl and x is as defined in claim 1.

4. A process according to claim 1, wherein the amine is an adduct of imidazole and a diglycidyl ether of bisphenol F, hydrogenated bisphenol A or bisphenol A.

5. A process according to claim 1, wherein the polyol in curing agent component (a) is resorcinol, hydroquinone, bisphenol F, bisphenol A, 2,2-bis(4-hydroxy-3,5-dibromophenyl)propane, 1,1,2,2-tetrakis(4-hydroxyphenyl)ethane, 4,4'-dihydroxybiphenyl, bis(4-hydroxyphenyl) sulfone or a novolac of formaldehyde or acetaldehyde and phenol, chlorophenol or an alkylphenol having up to 9 carbon atoms in the alkyl.

6. A process according to claims 1 - 4, wherein the polyol in curing agent component (a) is a phenol novolac, resorcinol, bisphenol F or bisphenol A.

7. A process according to claim 1, wherein curing agent component (a) is a salt of resorcinol, bisphenol F or bisphenol A and tris(dimethylaminomethyl)phenol, dimethylaminomethylphenol, 2-n-propylimidazole, N,N-dimethylaminopropylamine, N,N-diethylaminopropylamine or N,N-diethyl-N'-(benzoyl)-1,3-diaminopropane or a salt of resorcinol, bisphenol F or bisphenol A and an adduct of imidazole and a diglycidyl ether of bisphenol A or bisphenol F.

8. A process according to claim 1, wherein curing agent component (a) is a salt in which there are 1 to 2 OH equivalents per nitrogen equivalent.

9. A process according to claim 1, wherein component (b) is an epoxy resin having on average more than one group which is bonded to a hetero atom and has the formula VIII

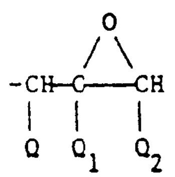

(VIII)

in which Q and $Q_2$ are both hydrogen atoms and $Q_1$ is a hydrogen atom or a methyl group or Q and $Q_2$ together are $-CH_2CH_2-$ or $-CH_2CH_2CH_2-$ and $Q_1$ is a hydrogen atom.

10. A process according to claim 1, wherein component (b) is a (so-called) advanced or non-advanced diglycidyl ether of 2,2-bis(4-hydroxyphenyl)propane, 2,2-bis(3,5-dibromo-4-hydroxyphenyl)propane [tetrabromobisphenol A], bis(4-hydroxyphenyl)methane, bis(4-hydroxycyclohexyl)methane or 2,2-bis(4-hydroxycyclohexyl)propane, a polyglycidyl ether of novolacs or tetraglycidylated 4,4'-diaminodiphenylmethane.

11. A process according to claim 1, wherein component (b) is a (so-called) advanced or non-advanced diglycidyl ether of bisphenol A, tetrabromobisphenol A or bisphenol F, tetraglycidylated 4,4'-diaminodiphenylmethane, a polyglycidyl ether of a phenol-formaldehyde or cresol-formaldehyde novolac or a mixture thereof.

12. A process according to claim 1, wherein curing agent component (a) is used in such an amount that there is 0.02 to 0.30, in particular 0.04 to 0.20, nitrogen equivalent per epoxy equivalent of component (b).

13. A process according to claim 1, wherein the viscosity of the binder at 25°C does not exceed 6,000 mPa.s, in particular 3,000 mPa.s.

14. A process according to claim 1, wherein salts of resorcinol or bisphenol A and dimethylaminomethylphenol, tris(dimethylaminomethyl)phenol or 2-n-propylimidazole, salts of a phenol novolac and imidazole, 2-n-propylimidazole or an adduct of imidazole and a bisphenol A diglycidyl ether and salts of resorcinol or bisphenol A and an adduct of imidazole and a bisphenol A diglycidyl ether are used as curing agent component (a).

## Revendications

1. Procédé pour revêtir intérieurement des tubes ou des parties de tubes par la méthode "Insituform", selon lequel un stratifié souple en forme de tuyau, constitué d'une membrane pratiquement imperméable aux liquides et d'une couche fibreuse imprégnée d'un liant non encore durci, est appliqué, au moyen d'une pression d'eau, par son côté portant le liant, contre la surface intérieure du tube de telle façon que le stratifié prenne la forme de la surface intérieure du tube, et le liant est durci dans cet état, par de l'eau chaude introduite par pompage, en donnant un revêtement intérieur adhérent, ce procédé étant caractérisé en ce qu'on utilise un stratifié imprégné d'un liant qui est constitué des composantes suivantes :

(a) comme durcisseur un sel dérivant d'une ou plusieurs (poly)amines renfermant au moins un atome d'azote tertiaire et d'un ou plusieurs polyols aromatiques ou d'un ou plusieurs phénols porteurs d'un radical aliphatique (ce radical aliphatique contenant au moins 9 atomes de carbone), qui est liquide à très visqueux et qui est éventuellement dilué par des solvants organiques à haut point débullition pris dans l'ensemble constitué par l'alcool furfurylique, le cyclopentanol, le cyclohexanol, l'essence de pin et les cétones cycliques,

(b) une résine époxydique liquide ou un mélange liquide de résines époxydiques, éventuellement additionnés d'un diluant réactif, et

(c) éventuellement, comme additif connus supplémentaires, des agents de thixotropie et des colorants, l'amine, dans le durcisseur (a), étant une amine répondant à l'une des formules I à VII :

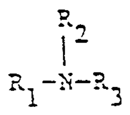 (I), 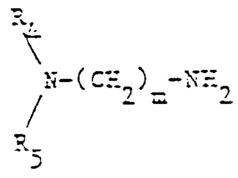 (II), 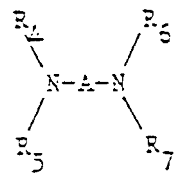 (III),

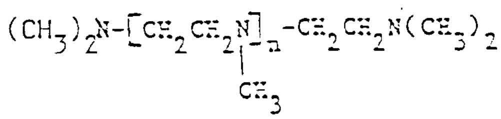 (IV), $(CH_3)_2N-A-R_8$ (V),

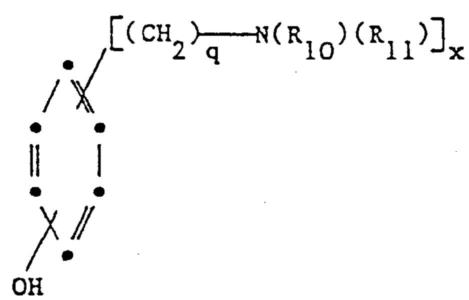

(VI)

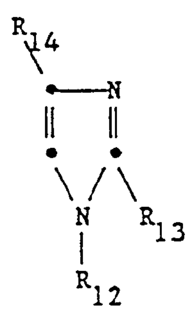

(VII)

dans lesquelles :

m représente un nombre de 2 à 6, n représente un nombre égal à 0, à 1 ou à 2,

$R_1$ représente un alkyle en $C_1$-$C_{12}$, un hydroxyalkyle en $C_1$-$C_4$ ou un alcoxyalkyle contenant au total de 2 à 6 atomes de carbone,

$R_2$ et $R_3$, indépendamment l'un de l'autre, ont chacun la signification qui a été donnée pour $R_1$ ou représentent chacun un radical phényle, benzyle, phényléthyle, cyclopentyle ou cyclohexyle substitué ou non,

$R_4$ représente un alkyle en $C_1$-$C_4$,

$R_5$ représente un alkyle en $C_1$-$C_4$, un cyclopentyle ou un cyclohexyle,

$R_6$ représente un alkyle en $C_1$-$C_{12}$, un phényle, un benzyle, un phényléthyle, un benzoyle un cyclopentyle, un cyclohexyle, un radical $-A_1CN$ ou un radical $-A_1CH_2NH_2$,

$R_7$ représente l'hydrogène ou un radical $-A_1CH_2NH_2$, ou encore

$R_6$ et $R_7$ forment ensemble un radical $-(CH_2)_P-$ dont P l'indice p est égal à 4 ou à 5, un radical $-(CH_2)_2O(CH_2)_2-$ ou un radical $-(CH_2)_2NH(CH_2)_2-$,

$R_8$ représente un radical

$-OR_9$, 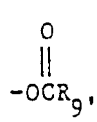, 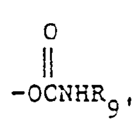, $-O-A_1CN$, $-O-A_1NH_2$,

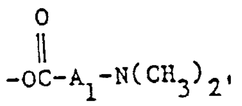, 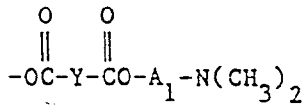 ou 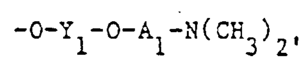,

$R_9$ représente un alkyle en $C_1$-$C_{12}$, un phényle, un benzyle, un cyclopentyle ou un cyclohexyle,

$R_{10}$ et $R_{11}$ représentent chacun, indépendamment l'un de l'autre, un alkyle en $C_1$-$C_4$,

$R_{12}$ représente l'hydrogène, un alkyle en $C_1$-$C_4$, un phényle ou un benzyle,

$R_{13}$ et $R_{14}$ représentent chacun, indépendamment l'un de l'autre, un atome d'hydrogène ou d'halogène, un alkyle en $C_1$-$C_4$, un phényle, un cyclohexyle ou un benzyle,

A et $A_1$ représentent chacun, indépendamment l'un de l'autre, un radical éthylène, propylène-1,2 ou propylène-1,3,

Y représente la liaison directe, un radical $-C_rH_{2r}-$ dont l'indice r est un nombre de 2 à 10, un phénylène, un toluylène ou un cyclohexylène,

$Y_1$ représente un radical $-C_rH_{2r}-$ dont l'indice r est un nombre de 2 à 10, un phénylène, un toluylène ou un cyclohexylène,

q représente le nombre 1 ou le nombre 2 et x représente un nombre de 1 à 3.

2 . Procédé selon la revendication 1 dans lequel l'amine est un produit d'addition d'un imidazole de formule VII dans lequel $R_{12}$ représente l'hydrogène tandis que $R_{13}$ et $R_{14}$ ont les significations qui leur ont été données à la revendication 1, avec un éther diglycidylique d'un polyol aromatique, en particulier un éther diglycidylique du bis-(hydroxy-4 phényl)-2,2 propane [bis-phénol A], du bis-(hydroxy-4 cyclohexyl)-2,2 propane [bis-phénol A] hydrogéné] ou du bis-(hydroxy-4 phényl)-méthane [bis-phénol F].

3. Procédé selon la revendication 1 dans lequel l'amine est le N,N-diméthyl-N'-(amino-3 propyl) diamino-1,3 propane, le N,N-diméthyl-N'-(cyano-2 éthyl) diamino-1,3 propane, le N,N-diéthyl-N'-benzoyl diamino-1,3 propane ou un mélange de ces composés, ou encore un composé répondant à l'une des formules I, II, VI et VII dans lequel $R_1$ et $R_2$ représentent chacun un éthyle ou un méthyle, $R_3$ représente un phényle non substitué ou un benzyle non substitué, m représente le nombre 2 ou le nombre 3, $R_4$ et $R_5$ représentent chacun, indépendamment l'un de l'autre, un méthyle ou un éthyle, q est égal à 1, $R_{10}$ et $R_{11}$ représentent chacun un éthyle ou chacun un méthyle, $R_{12}$ et $R_{14}$ représentent chacun l'hydrogène, $R_{13}$ représente l'hydrogène ou un alkyle en $C_1$-$C_4$ et x a la signification qui lui a été donnée à la revendication 1.

4. Procédé selon la revendication 1 dans lequel l'amine est un produit d'addition de l'imidazole et d'un éther diglycidylique du bis-phénol F, du bis-phénol A hydrogéné ou du bis-phénol A.

5. Procédé selon la revendication 1 dans lequel le polyol du durcisseur (a) est le résorcinol, l'hydroquinone, le bis-phénol F, le bis-phénol A, le bis-(hydroxy-4 dibromo-3,5 phényl)-2,2 propane, le tétrakis-(hydroxy-4 phényl)-1,1,2,2 éthane, le dihydroxy-4,4' biphényle, la bis-(hydroxy-4 phényl)-sulfone ou une novolaque dérivant, d'une part, du formaldéhyde ou de l'acétaldéhyde et, d'autre part, du phénol, d'un chlorophénol ou d'un alkylphénol dont l'alkyle contient au plus 9 atomes de carbone.

6. Procédé selon l'une quelconque des revendications 1 à 4 dans lequel le polyol du durcisseur (a) est une novolaque dérivant du phénol, le résorcinol, le bis-phénol F ou le bis-phénol A.

7 . Procédé selon la revendication 1 dans lequel la composante durcisseur (a) est un sel du résorcinol, du bis-phénol F ou du bis-phénol A et du tris-(diméthylaminométhyl)-phénol, du diméthylaminométhyl-phénol, du n-propyl-2 imidazole, de la (N,N-diméthylamino-propyl)-amine, de la (N,N-diéthylamino-propyl)-amine ou du N,N-diéthyl-N'-benzoyl diamino-1,3 propane, ou un sel du résorcinol, du bis-phénol F ou du bis-phénol A et d'un produit d'addition de l'imidazole et d'un éther diglycidylique du bis-phénol A ou du bis-phénol F.

8 . Procédé selon la revendication 1 caractérisé en ce qu'on utilise, comme durcisseur (a), des sels dans lesquels il y a de 1 à 2 équivalents d'OH par équivalent d'azote.

9 . Procédé selon la revendication 1 caractérisé en ce qu'on utilise, comme composante (b), des résines époxydiques qui contiennent en moyenne plus d'un radical répondant à la formule VIII :

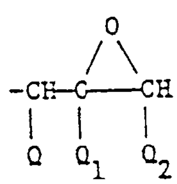

(VIII)

dans laquelle Q et $Q_2$ représentent chacun un atome d'hydrogène et $Q_1$ est un atome d'hydrogène ou un radical méthyle, ou Q et $Q_2$ forment ensemble un radical $-CH_2CH_2-$ ou $-CH_2CH_2CH_2-$ et $Q_1$ représente un atome

d'hydrogène, fixé à un hétéroatome.

10 . Procédé selon la revendication 1 caractérisé en ce qu'on utilise, comme composante (b), des éthers diglycidyliques, éventuellement pré-allongés, du bis-(hydroxy-4 phényl)-2,2 propane, du bis-(dibromo-3,5 hydroxy-4 phényl)-2,2 propane [tétrabromo-bis-phénol A], du bis-(hydroxy-4 phényl)-méthane, du bis-(hydroxy-4 cyclohexyl)-méthane ou du bis-(hydroxy-4 cyclohexyl)-2,2 propane, des éthers polyglycidyliques de novolaques, ou le diamino-4,4′ diphénylméthane tétraglycidylé.

11. Procédé selon la revendication 1 caractérisé en ce qu'on utilise, comme composante (b), des éthers diglycidyliques, éventuellement pré-allongés, du bis-phénol A, du tétrabromo-bis-phénol A ou du bis-phénol F, le diamino-4,4′ diphénylméthane tétraglycidylé, des éthers polyglycidyliques de novolaques phénol/formaldéhyde ou crésol/formaldéhyde, ou des mélanges de ces composés.

12. Procédé selon la revendication 1 caractérisé en ce que la composante durcisseur (a) est mise en jeu en une quantité telle qu'il y ait de 0,02 à 0,30 équivalent d'azote, plus particulièrement de 0,04 à 0,20, par équivalent d'époxy de la composante (b).

13. Procédé selon la revendication 1 dans lequel la viscosité du liant à 25°C ne dépasse pas 6 000 mPa.s, plus particulièrement 3 000 mPa.s.

14. Procédé selon la revendication 1 dans lequel on utilise, comme composante durcisseur (a), des sels dérivant du résorcinol ou du bis-phénol A et du diméthylamilaminométhylphénol, du tris-(diméthylaminoéthyl)-phénol ou du n- propyl-2 imidazole, des sels dérivant d'une novolaque phénolique et de l'imidazole, du n-propyl-2 imidazole ou d'un produit d'addition de l'imidazole avec un éther diglycidylique du bis-phénol A, et des sels dérivant du résorcinol ou du bis-phénol A et d'un produit d'addition de l'imidazole avec un éther diglycidylique du bis-phénol A.